# EUROPEAN PATENT APPLICATION

(11) **EP 2 244 062 A1**
(43) Date of publication of application: **27.10.2010**
(21) Application number: 09158643.8
(22) Date of filing: 23.04.2009
(51) Int. Cl.: G01C 21/00

(54) **Method for relating a map to the environment**

(71) Applicant: Wayfinder Systems AB, 221 05 Lund (SE)
(72) Inventor: Carlsson, Stefan, SE-237 91, BJÄRRED (SE); Ekstrand, Simon, SE-241 92, ESLÖV (SE); Alsed, Jesper, SE-263 92, JONSTORP (SE)
(74) Representative: Henriksson, Dan Ragnar Mikael

(57) **Abstract**

There is provided a method for providing sun position indicating map data. The method comprises receiving map data, time data, position data and solar ephemeris data. Further, the method comprises the steps of determining sun position data using the data received and generating sun position indicating map data using the map data and the determined sun position data. The sun position indicating map data may further be transmitted to a display. By providing sun position indicating map data, a map may be related to the environment which it describes in a simplified way. A corresponding device and computer program product is also provided.

## Description

### Field of the invention

The present invention relates to the field of position services. In particular, it relates to a method, a device and a computer program product for providing improved map data.

### Background of the invention

Maps have been used for centuries to describe geographical environments. A map may be used for different purposes. For example a map may be used for navigation purposes, that is to find the way from one location to another, for the purpose of giving an overview of a geographical region or for providing some other type of information relating to a certain geographical region.

In order to make use of a map, the map has to be adjusted in accordance to the environment. In other words, a person using the map must be able to relate the map to the area the map describes in order to make use of the information the map provides.

Traditionally, a map is used together with a compass which uses the earth's magnetic field to give an indication of the true north direction of the environment and thereby providing the map with an orientation. However, there are cases when a compass is not available or is inappropriate to use. This is for example the case in mobile phones and other electrical devices where the presence of closely located magnetic and electrical components give rise to magnetic fields that may interfere with the compass' measurement of magnetic orientation.

Another aid which may be used to relate a map to the environment is position determination signals from satellites which may be processed to give information regarding a user's current location on a map. Such signals are often used in vehicle navigation systems. In vehicle navigation systems the orientation of the map is typically determined by using the direction of movement of the vehicle. The direction may not be obtained directly from the satellite signal, but has to be predicted by using previously obtained position data. As long as the vehicle is moving rapidly in a straight direction the direction of the movement of the vehicle may be predicted with high precision. Otherwise, for example if the speed of the vehicle is low or the satellite signal is blocked, the prediction may be incorrect or, even unavailable.

US 6,043,778 discloses a method for determining orientation of a navigation system which uses sighting of reference objects, in particular celestial bodies, to improve orientation. The method measures the current time and location and utilises a solar sighting system for calculating the position of the sun by using light sensing devices. The orientation of the navigation system is then obtained by comparing the calculated position of the sun to solar ephemeris data for the current time.

However, in order for the method in US 6,043,778 to work, the navigation system must be equipped with a solar sighting system. Such solar sighting systems are complicated and expensive and, typically, they are not standard equipment in all devices in which one may like to implement a navigation system. For example, they are not available in a typical mobile phone. In addition, by definition, the system will not work if the solar sighting system does not receive a certain level of direct sunlight.

### Summary of the invention

The object of the present invention is to mitigate some of the shortcomings disclosed above. One object in particular is to provide a method, a device and a computer program product that provides information which may be used to make it easier to relate a map to the environment which it describes. One object in particular is to provide a method, a device and a computer program product that provides information which may be used to obtain a direction of the map. One object in particular is to provide a method, a device and a computer program product that provides information which may be used to relate a map to the environment which it describes independently of using information from a compass. One object in particular is to provide a method, a device and a computer program product that provides information which may be used to relate a map to the environment which it describes independently of using information from a solar sighting system.

According to a first aspect of the invention, the above objects are achieved by a method in a device for providing sun position indicating map data. The method comprises receiving map data, receiving time data, receiving position data, receiving solar ephemeris data, determining, by a processing unit, sun position data using the time data, the position data and the solar ephemeris data, generating, by the processing unit, sun position indicating map data using the sun position data and the map data, and transmitting the sun position indicating map data to a display.

By sun position indicating map data is meant map data in which the position of the sun is indicated in any manner. For example the position of the sun may either be indicated directly and/or indirectly. However, in either case, it should be possible to obtain information regarding the position of the sun from the sun position indicating map data, particularly when the sun position indicating map data is transmitted to a display.

The present invention is based on the realisation that by providing indication of the position of the sun in map data, the map data may be related to the surrounding environment. Thus, a user of the device comprising the sun position indicating map data receives information about the position of the sun relatively to the map data.

Further, a basic idea of the invention is to use the relation between the position of the sun and the cardinal points (north, south, east and west) and to combine this with map data, in order to give the map a direction. In this way, if for example sun and shadow effects are added to the map, a user provided with the map receives information relating to the direction of the map.

Moreover, the implementation of the invention does not require any complicated or expensive instruments, such as a compass or a solar sighting system, and consequently information which may be used to relate the map to the environment is provided in a simplified way. For example, it may be implemented in a mobile telephone.

The sun position indicating map data may for example be used for orienting the map by comparing the true position of the sun as related to the environment and the position of the sun as indicated by the map. In particular, this may be useful for devices associated with low velocities of transportation, such as devices suitable to be worn by pedestrians, since it is difficult to estimate the movement of a walking person correctly using satellite signals (as for devices associated with high velocities of transportation, such as devices suitable for car navigation) and consequently the movements cannot be used to obtain the orientation of the map. Further, the method according to the invention provides users with an effective and intuitive way of relating the map to the surrounding environment, therefore making it suitable for navigation purposes.

A further advantage of the invention is that it may not only be used to find the orientation of a map or for navigation purposes but it may also provide a user with information regarding which parts of the environment that are in direct or indirect sun light and which parts that are in shadow at a certain time. For example, it may be used to find which side of the street that will be sunny in the afternoon, and in that way a user may for instance decide where to park his car in order to avoid the sun.

The time data may generally be a single time point or a time interval and it may refer to any day of the year and any time of the day. Similarly, the position data may correspond to a single position or a geographical region. In one embodiment, however, the time data corresponds to a current time. Further, the position data may correspond to a current position of the device. In this way the generated sun position indicating map data gives indication of the position of the sun at the current location and at the current time. This is particularly advantageous for orientation purposes where the map data typically is to be oriented with respect to the current surrounding environment at the current time.

The map data may for example comprise transportation paths such as roads, footpaths, bicycle paths, railways, bridges, and rivers, parks, forests, and the like. Optionally, it may further comprise map objects. By map object is meant an object which for example represents a house, a building, a statue, a fence or the like. Further it may represent a tree or any type of (individual) vegetation object.

In one embodiment the map objects have a two-dimensional representation. Consequently, the map objects may require modest memory requirements when they are stored in a map database and further they may be easy to represent on the map.

In another embodiment the map objects have a three-dimensional representation. By using a three-dimensional representation of the map objects the map is provided with a third dimension. This may be advantageous if the sun position indicating map data comprises indication of the altitude of the sun. It may also be advantageous in that it provides a more life-like representation of the environment, thereby improving the orientation.

In principle, the sun position indicating map data may comprise anything that serves the purpose of indicating the position of the sun. In one embodiment, however, the step of generating said sun position indicating map data comprises adding to the map data a representation of the sun at one or more positions in the map data corresponding to the determined sun position data. By adding such a representation of the sun, the sun position indicating map data provides a user with information regarding the position of the sun which is easy to interpret and thereby allows the user to fast and easily relate the map to the surrounding environment.

Optionally, the step of generating sun position indicating map data further comprises determining one or more shadowed regions in the map data based on the sun position data and the map data, and adding to the map data a representation of the one or more shadowed regions. By a shadowed region is meant a region of the map which indicates a position which is opposite to the position of the sun.

Shadowed regions provide an indirect way to indicate the position of the sun. For example, if the sun is located in the south direction the shadowed regions are located in the north direction and consequently, by obtaining knowledge about the shadows, one will indirectly know the direction of the sun, thereby enabling orientation.

One advantage of adding one or more shadowed regions to the sun position indicating map data is that the resulting map data comprises information relating to the position of the sun, thereby helping a user to relate the map to the environment. A further advantage is that the sun position indicating map data may provide an improved orientation of the surrounding environment in comparison to the original map data, thereby helping a user to intuitively orient the map or use it for navigation. For example, if a user of the device is walking on the right hand side of a street, which is the sunny side, and the sun position indicating map data shows the opposite, namely that the right hand street is the shady side of the street, then the user will intuitively know that he is walking in the wrong direction. A still further advantage of having sun position indicating map data comprising shadowed regions is that a user may easily obtain information about where the shade will be at different times of the day at different locations. For example, a user may obtain information regarding where to park a car in order to have the car in the shade during the afternoon or which way to walk to a particular location in order to stay in the shade most of the time. This is particularly advantageous in a case when the user is positioned in a for him unknown environment.

In general, a shadowed region is a region of the map which indicates a position which is opposite to the position of the sun. In one embodiment, however, the shadowed regions are associated with the map objects. More precisely, the step of generating sun position indicating map data may further comprise determining one or more shadowed regions associated with the map objects in the map data based on the sun position data and the map objects in the map data, and adding to the map data a representation of the one or more shadowed regions. In this way, since each map object may be associated with a shadowed region, detailed shadows may be generated and thereby further improve the resemblance between the map and the true environment.

By adding shadows to the map data, information about the direction of the sun may be obtained. However, in order to also obtain information relating to the altitude of the sun the shape of the shadowed regions may be varied. For example, the shadowed regions associated with the sun being at a low altitude may be larger than the shadowed regions associated with the sun being at a high altitude . Therefore, in one embodiment, the one or more shadowed regions have a length, wherein the length is determined using the position data and the sun position data. A large shadow is associated with a large length and vice versa.

Depending on the weather condition the sun may be more or less visible. In order to adjust the sun position indicating map data for this fact, the method may optionally comprise receiving weather condition data related to the position data from a weather condition database, wherein the weather condition data is used in the step of generating sun position indicating map data.

In case the weather condition corresponds to a cloudy weather condition, the sun position indicating map data may further be modified to exclude indication of the sun position data. Thereby, the appearance of the sun position indicating map data and the environment may be made similar. Alternatively the device may be arranged to transmit a message to the display indicating that the provided orientation information may not be reliable because of the current weather conditions.

In order to obtain a correct orientation of the map relatively the surrounding environment, the map may be rotated such that the true position of the sun in the environment and the position of the sun as indicated by the sun position indicating map data are in agreement. The map may either be rotated by rotating the whole device or by rotating the map data internally in the device. In the latter case also the sun position indicating map data has to be rotated. In one embodiment this is achieved by receiving information relating to a change of orientation of the map data, generating, by the processing unit, updated map data by using the information relating to a change of orientation, and generating, by the processing unit, updated sun position indicating map data based on the sun position data and the updated map data.

In some situations it is advantageous if the intensity of the indication of the position of the sun is stronger than what is indicated in the true environment. Sometimes the opposite may hold. Therefore, in one embodiment, the intensity of said one or more shadowed regions is adjustable associated with the displayed map data. The intensity of the shadowed regions may be based on weather conditions. The intensity of the shadowed regions may be based on the point in time associated with the displayed map data. The intensity of the shadowed regions may be user adjustable.

According to a second aspect of the invention, the object is achieved by a device for providing sun position indicating map data, comprising a receiver for receiving map data, time data, position data and solar ephemeris data, a processing unit arranged to determine sun position data using the time data, the position data and the solar ephemeris data, and to generate sun position indicating map data using the sun position data and the map data, and a transmitter for transmitting the sun position indicating map data.

Further, the device may additionally comprise a display for displaying said sun position indicating map data.

According to a third aspect of the invention, the object is achieved by a computer program product stored on a computer-readable medium comprising computer program code portions adapted to perform the method as disclosed above when loaded and executed on a computer.

The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

Embodiments of the present invention will be described, by way of example, with reference to the accompanying schematic drawings, in which
Fig. 1 is a schematic view of a device according to embodiments,
Fig. 2 is a schematic view of internal components of a device according to embodiments,
Figs. 3-8 are illustrations of display views according to embodiments, and
Fig. 9 is a flowchart according to embodiments.

### Detailed description

In the accompanying drawings certain embodiments are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Devices will be described in an operating mode. Like numbers refer to like elements throughout.

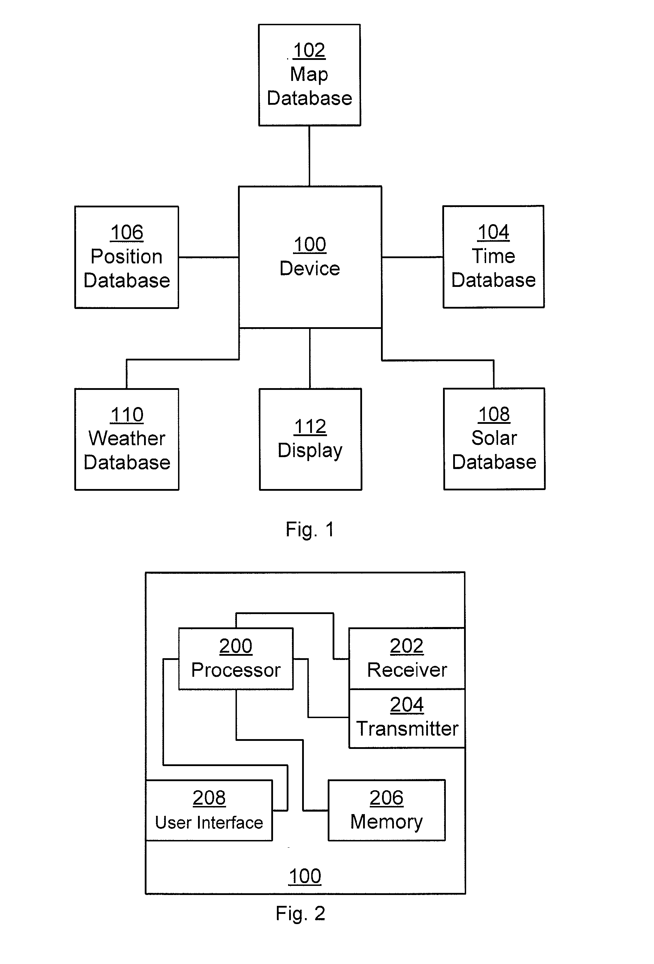

Fig. 1 is a schematic view of a device 100 according to embodiments. The device 100 may be (part of) a mobile communications device, such as a mobile phone, a personal digital assistant (PDA), a laptop computer, and the like. The device 100 is configured to be wired or wirelessly operatively connected to *inter alia* a map database 102, a time database 104, a position database 106, a solar database 108, a weather database 110 and a display 112. The map database 102 comprises map data describing geographical regions. For example it may comprise maps of cities, road networks, bike paths, lakes, vegetation and the like. The time database 104 comprises information regarding a time calendar, such as year, month and time. In particular it may comprise information about the current time. The position database 106 comprises information regarding geographical positions. For instance, the position may be the current position of the device or any other remote position. The solar database 108 comprises solar ephemeris data, that is, data relating to the calendar of the motion of the sun. Having access to solar ephemeris data the position of the sun may be predicted for a given time and position. Further, the weather database 110 comprises information about weather conditions at different times and at different positions. Thus, the weather condition may be the current weather condition at a certain position, the weather condition at a previous time at some position, or a prediction of the weather condition at a future time at some position. The display 112 is arranged to present information, such as map data, to a user. It may be of any known type of display such as a liquid crystal display (LCD) or a plasma display panel (PDP). Some of said databases 102, 104, 106, 108, 110 may be comprised in the device 100.

Fig. 2 is a schematic view of internal components of the device 100 of Fig. 1 according to embodiments. The device 100 comprises a processing unit 200, or processor, which may be a central processing unit (CPU). The processing unit 200 is arranged to be operatively connected to a receiver 202, a transmitter 204, a memory 206, and a user interface 208. The receiver 202 is configured to receive data signals from external units, devices, and apparatuses in any known manner. For example, the receiver 202 may be configured to receive data from the map database 102, the time database 104, the position database 106, the solar database 108 and the weather database 110. Further, the receiver 202 may be configured to receive satellite signals relating to position and/or time, such as signals from the global positioning system (GPS). Likewise, the transmitter 204 is configured to transmit data signals to external units, devices, and apparatuses in any known manner. The receiver 202 and the transmitter 204 may be part of a common transceiver configured to both receive and transmit data. The memory 206 may be configured to store software instructions pertaining to a computer-implemented method for providing sun position indicating map data. The memory 206 may thus form a computer-readable medium which may have stored thereon software instructions. The software instructions may cause the processing unit 200 to execute the method according to embodiments of the present invention.

The user interface 208 is arranged to receive user instructions and to present data processed by the processing unit 200 and/or received by the receiver 202 to a user. The user interface 208 may be operatively connected to the display 112. The user instructions may pertain to operations to be performed on the data items displayed by the display 112. Particularly the user instructions may pertain to operations associated with panning, zooming, and tilting the displayed data items. Further, the user instructions may pertain to time data and/or position data.

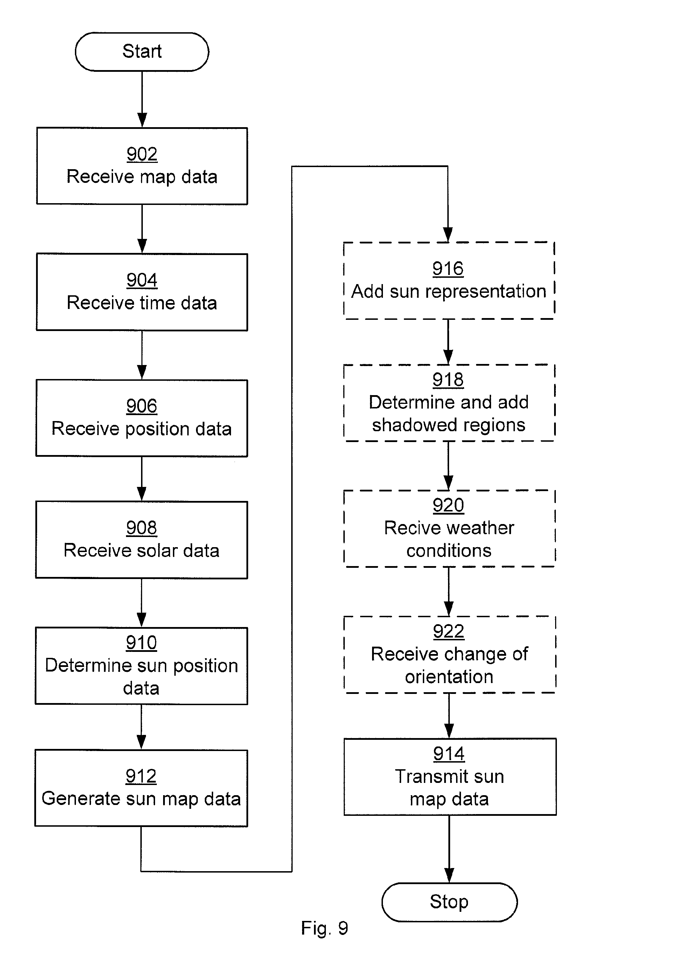

A method for providing sun position indicating map data will now be described with reference to the flowchart of Fig. 9.

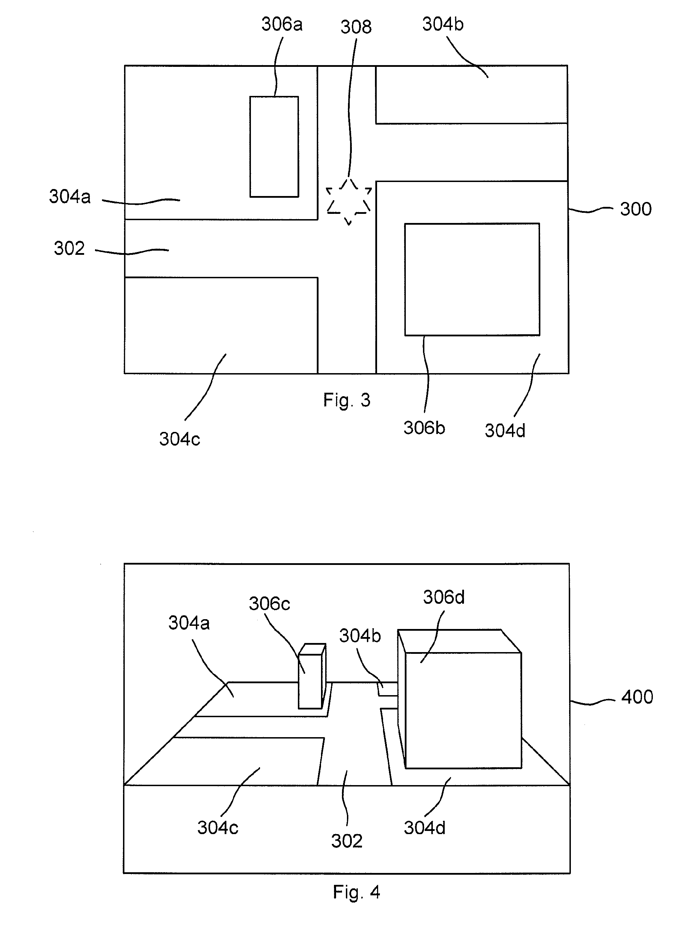

In step 902 map data is received. The map data may be received from the map database 102 which may be an external unit or comprised inside the device 100. As illustrated in the display views 300 and 400 of Figs. 3-4, map data may comprise transportation paths 302 such as roads, footpaths, bicycle paths, railways and bridges, and ground areas 304a-d such as sidewalks, grounds, parks, grass, rivers and other bodies of water. In Fig. 3 the map data is shown from a top view and in Fig. 4 the map data is shown from a perspective view. Further, the map data may comprise map objects 306a-d, such as buildings, individual trees, landmarks etc. In the example in Figs. 3-4 the map objects 306a-d illustrate buildings having the shape of a parallelepiped. The map objects 306a-d may be represented in different ways. In the embodiment shown in Fig. 3 the map objects 306a-b have a two-dimensional representation, wherein the parallelepiped shaped buildings are illustrated by rectangles. In the embodiment shown in Fig. 4 the map objects 306c-d instead have a three-dimensional representation, and the parallelepiped shaped buildings are thus illustrated as parallelepipeds.

In step 904 time data is received. The time data may be received from the time database 104, from user input, for example via the user interface 208, or from a satellite signal. The time data may comprise a single time point or one or several time intervals. Further, the time data may correspond to a current time, a past time or a future time.

Further, in step 906, position data is received. The position data may be received from the position data base 106, from user input, for example via the user interface 208, or from a satellite signal. The position data may correspond to a current position of the device 100, or to a remote position. The position data may be indicated on the display, as illustrated by reference 308 in the display view 300 in Fig. 3.

In step 908 solar ephemeris data is received. The solar ephemeris data, which comprises the position of the sun for different times and locations, may be stored in the solar database 108. Alternatively, ephemeris data for other celestial bodies, such as the moon or stars, may be used.

Next, in step 910, sun position data is determined by a processing unit, for example by the processor 200. In order to determine the sun position data the time data received in step 904, the position data received in step 906 and the solar ephemeris data received in step 908 are used. Since the solar ephemeris data may comprise the position of the sun for different times and positions, the process of determining sun position data may comprise finding the position of the sun in the solar ephemeris data that corresponds to the time given by the time data and the position given by the position data.

In step 912, sun position indicating map data is generated by using the map data received in step 902 and the sun position data determined in step 910. Since the position of the sun relatively the map data is known from step 902, this information may be used to indicate the position of the sun in the map data.

In step 914, the sun indicating map data is transmitted to a display, for example the display 112 of Fig. 1. Alternatively the display may be comprised in the device 100.

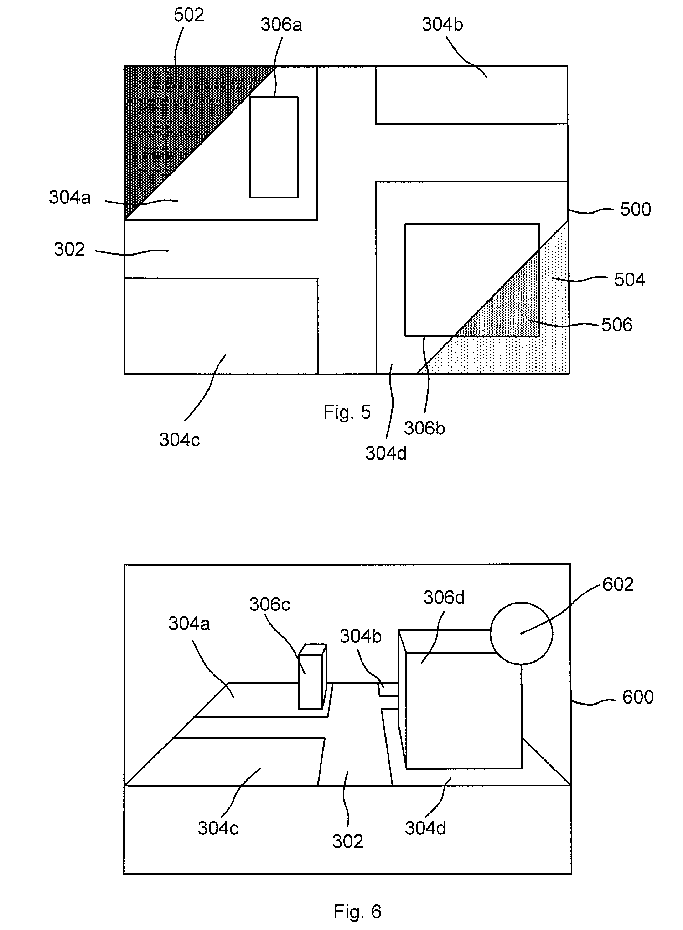

In some embodiments the step 912 of generating the sun position indicating map data further comprises a step 916 of adding to the map data a representation of the sun at one or more positions in the map data. The display views 500 and 600 of Figs. 5-6 illustrate two different ways of adding such a representation of the sun. In the display view 500, comprising a top view of map data with map objects having a two-dimensional representation, the lower right-hand region 504 has been shaded with a light colour to indicate the position of the sun. Assuming that the upwards direction of the map is the north direction, the lower right-hand region 504 thus indicates that the sun is positioned in the south-east. Similarly, the position of the sun may be indicated by a gradual change from a light colour to a dark colour along an axis parallel with the direction of the sun. Further, in the illustrated example, the part of the region 504 that is covered by the map object 306b has been given a different colour tone in order to preserve all information available in the original map data.

In the display view 600, comprising a perspective view of map data with map objects having a three-dimensional representation, an indication of the sun 602 has been included to indicate the position of the sun relatively the map data. Here, the sun has been placed "in front of" the building 306d to indicate that the sun is in a south-east direction. Conversely, a sun placed "behind" the building 306d would indicate a north-east position of the sun. In general, the sun may be placed in different ways on the display view and its colour and size may be varied so that it gives a good indication of the position of the sun even in the absence of buildings. The embodiments shown in Figs. 5 and 6 are two possible embodiments and other embodiments are possible. For example, the embodiment shown in Fig. 5 comprising a two-dimensional map may be applied to a three-dimensional map such as the one shown in Fig. 6 and vice versa.

In some embodiments the step 912 of generating sun position indicating map data further comprises a step 918 of determining one or more shadowed regions based on the sun position and the map data and adding to the map data a representation of the one or more shadowed regions. By adding shadowed regions to the map data the user of the map will get an indication of the position of the sun. A shadowed region does not necessarily have to be an actual shadow which is formed by objects blocking the sun, but it may correspond to a region which indicates a position on the map which is opposite to the position of the sun. Such a situation is illustrated in Fig. 5. In the upper left-hand part of the display view 500 a region 502 has been shaded with a dark tone to illustrate that this is a shadowed region, that is, a region that in this case indicates that the position of the sun is in the opposite direction. Further, as illustrated in Fig. 5, the shadowed regions may be applied in combination with a representation of the sun, in order to provide a further improved indication of the position of the sun.

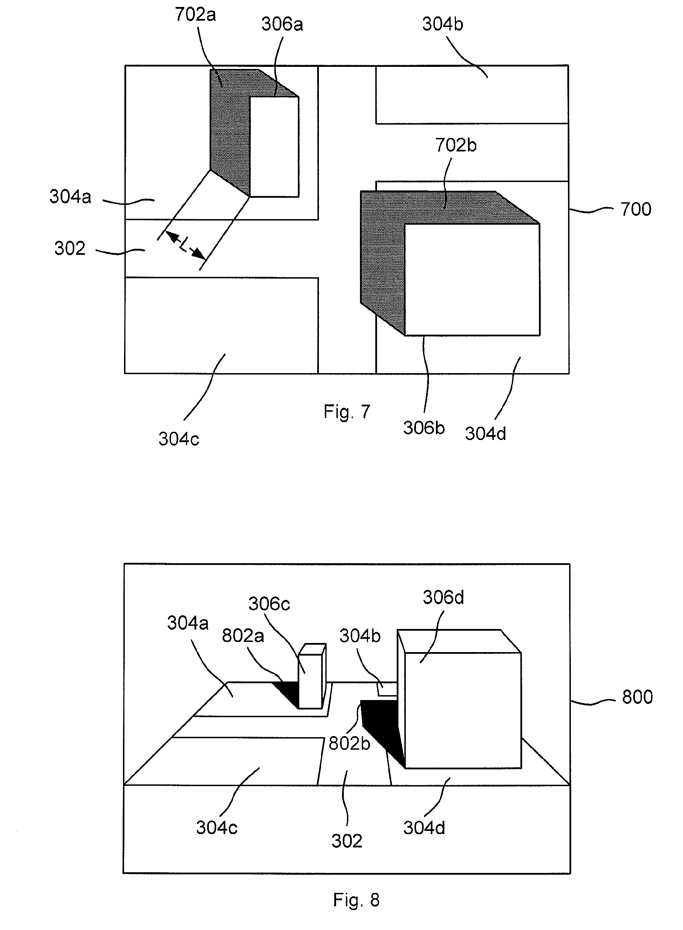

In some embodiments the shadowed regions are associated with the map objects 306a-d. In this case the shadows regions correspond to actual shadows formed by the real-life objects represented by the map objects blocking the sun. For example, in the display view 700 of Fig. 7, which illustrates a two-dimensional representation of sun position indicating map data, the map objects 306a and 306b are associated with the shadowed regions 702a and 702b, respectively. Similarly, in the display view 800 of Fig. 8, which shows a three-dimensional representation of sun position indicating map data, the map objects 306c and 306d are associated with the shadowed regions 802a and 802b. As the shadowed regions 702a-b and 802a-b are located in the north-west direction of the buildings (assuming again that north is towards the top of each display view), they give an indication to the user that the sun is in a south-east position.

The size and shape of the shadowed regions may be varied based on, for example, the size and shape of the map objects, the position of the sun in the sky and/or the position data. For example, a high building may give rise to a longer shadow than a low building. Depending on the direction of the sun the shadows may have different shapes; if the sun is at a high altitude the shadows will be smaller than if the sun is at a low altitude and, typically the latitude of the position data will be related to the altitude of the sun and thereby to the size of the shadows. Therefore, in some embodiments, the length of the shadow may be determined based on the sun position data, which in turn depends on the time data and the position data. The length of the shadowed regions may further be based on the position data. In Fig. 7, one definition of the length L of a shadowed region is shown. However, other definitions are possible as long as the length L of a shadowed region is related to the size of the shadow. Using shadowed regions having a length which is based on the sun position data is advantageous since the resulting sun position indicating map data will resemble the true environment. Thus, it will provide a user with information which helps him to relate the map to the environment in an intuitive way.

Some users may prefer to have the shadowed regions indicated on the map data with a high intensity and some may prefer to have them indicated with a low intensity. In order to meet this need for the users and in order to increase the flexibility of the method, the intensity of the shadowed regions may be made adjustable. For example, the shadowed regions 702a-b of Fig. 7 are shown with a lower intensity than the shadowed regions 802a-b of Fig. 8. The intensity of the shadowed regions may for example be adjusted by using the user interface 208. Further, the intensity of the shadowed regions may depend on weather conditions; the more intense the sunlight is the higher the intensity of the shadowed regions, and vice versa. Furthermore, the intensity of the shadowed regions may depend on time conditions; the closer the time is to noon (i.e. 12:00 AM) the higher the intensity of the shadowed regions in comparison to the remaining map data, and vice versa. Even further, the intensity of the shadowed regions may depend on properties of the display screen.

In some embodiments the method may further comprise a step 920 of receiving weather condition data related to the position data and the time data. The weather condition data may comprise information relating to the amount of clouds, which in turn affects the visibility of the sun and the presence of shadows. The weather condition data may be used in the step 912 of generating sun position indicating map data by altering the intensity of the indication of the sun. For example, if the weather condition indicates a clear blue sky, the indication of the representation of the sun 504 and 602 may be made with a higher intensity than if the weather condition indicates a sky which is partly covered by clouds. Similarly, the shadowed regions 702a-b and 802a-b may be indicated with a darker colour if the weather condition is sunny compared to if the weather condition is cloudy. By using the weather condition in the step 912 of generating sun position indicating map data, the resulting map data will resemble the environment and will improve a user's possibilities to relate the map to the environment.

In some situations it may be advantageous not to include indication of the sun in the map data. For example, if the real-life sun is covered by clouds it may be confusing for a user if the sun is indicated on the map. In order to avoid such a situation the sun position indicating map data may be modified to exclude indication of the sun position data depending on the weather condition received in step 920. By excluding indication of the sun position data the resulting sun position indicating map data will be equivalent to the original map data. Alternatively, as the device may not have access to accurate real-time weather condition information, there may be prompted to the user a warning message indicating that cloudy weather conditions have been indicated to the device.

Sun position indicating map data may be used to orient a map so that the north direction of the map points in the true north direction. This may be achieved in different ways. For example, the user may rotate the whole device 100 until the true sun in the sky and the sun 504 or 602 in the sun position indicating map data become aligned. Another option is to rotate the sun position indicating map data internally in the device 100 until the sun 504 or 602, when shown on the display 112, becomes aligned with the true sun in the sky. In one embodiment this is achieved by a step 922 of receiving information relating to a change of orientation of the map data, generating updated map data using the information relating to a change of orientation and generating updated sun position indicating map data based on the sun position data and the updated map data. The information relating to a change of orientation of the map data may be received from the user via for example the user interface 208. The information may comprise information about how much the map should be rotated in a certain direction or how it should be tilted.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method in a device for providing sun position indicating map data, comprising
receiving map data,
receiving time data,
receiving position data,
receiving solar ephemeris data,
determining, by a processing unit, sun position data using said time data, said position data and said solar ephemeris data,
generating, by the processing unit, sun position indicating map data using said sun position data and said map data, and
transmitting said sun position indicating map data to a display.

2. The method according to claim 1, wherein said time data corresponds to a current time and said position data corresponds to a current position of said device.

3. The method according to any one of claims 1-2, wherein said map data comprises map objects having a two-dimensional representation.

4. The method according to any one of claims 1-3, wherein said map data comprises map objects having a three-dimensional representation.

5. The method according to any one of claims 1-4, wherein the step of generating said sun position indicating map data comprises adding to said map data a representation of the sun at one or more positions in said map data corresponding to said determined sun position data.

6. The method according to any one of claims 1-5, wherein the step of generating sun position indicating map data further comprises determining one or more shadowed regions in said map data based on said sun position data and said map data, and adding to said map data a representation of the one or more shadowed regions.

7. The method according to claim 3 or 4, wherein the step of generating sun position indicating map data further comprises determining one or more shadowed regions associated with said map objects in said map data based on said sun position data and said map objects in said map data, and adding to said map data a representation of the one or more shadowed regions.

8. The method according to claim 6 or 7, wherein said one or more shadowed regions have a length, wherein said length is determined using said position data and said sun position data.

9. The method according to any one of claims 1-8, further comprising
receiving weather condition data related to said position data and said time data from a weather condition database, wherein said weather condition data is used in the step of generating sun position indicating map data.

10. The method according to claim 9, wherein, in case the weather condition data corresponds to a cloudy weather condition, said sun position indicating map data is modified to exclude indication of said sun position data.

11. The method according to any one of claims 1-10, further comprising
receiving information relating to a change of orientation of said map data,
generating, by the processing unit, updated map data by using said information relating to a change of orientation, and
generating, by the processing unit, updated sun position indicating map data based on said sun position data and said updated map data.

12. The method according to claim 7 or 8, wherein the intensity of said one or more shadowed regions is adjustable.

13. A device for providing sun position indicating map data, comprising
a receiver for receiving map data, time data, position data and solar ephemeris data,
a processing unit arranged to determine sun position data using said time data, said position data and said solar ephemeris data, and to generate sun position indicating map data using said sun position data and said map data, and
a transmitter for transmitting said sun position indicating map data.

14. The device according to claim 13, further comprising
a display for displaying said sun position indicating map data.

15. A computer program product stored on a computer-readable medium comprising computer program code portions adapted to perform the method according to any of claims 1-12 when loaded and executed on a computer.
